# EUROPEAN PATENT APPLICATION

(11) **EP 2 985 879 A1**
(43) Date of publication of application: **17.02.2016**
(21) Application number: 14779175.0
(22) Date of filing: 30.01.2014
(51) Int. Cl.: H02J 50/00, H02J 7/00

(54) **WIRELESS POWER TRANSFER DEVICE, SUPPLIED-POWER CONTROL METHOD FOR WIRELESS POWER TRANSFER DEVICE, AND WIRELESS-POWER-TRANSFER-DEVICE MANUFACTURING METHOD**

(30) Priority: 01.04.2013 JP 2013076255
(71) Applicant: Nitto Denko Corporation, Ibaraki-shi, Osaka 567-8680 (JP)
(72) Inventor: HATANAKA, Takezo, Ibaraki-shi Osaka 567-8680 (JP); TSUDA, Hisashi, Ibaraki-shi Osaka 567-8680 (JP)
(74) Representative: Müller-Boré & Partner Patentanwälte PartG mbB
(86) International application number: PCT/JP2014/052049
(87) International publication number: WO 2014/162766

(57) **Abstract**

A wireless power transmission apparatus, a supply power control method, and a manufacturing method of the wireless power transmission apparatus, with which supply power is controlled by adjusting the resonance frequency of a coil of a power-supplying device and/or the resonance frequency of a coil of a power-receiving device while power transmission efficiency is maintained, are provided. As a supply power control method for a wireless power transmission apparatus 1 which supplies power from a power-supplying module 2 including a power-supplying resonator 22 to a power-receiving module 3 including a power-receiving resonator 32 by changing a magnetic field, power supplied to a power-supplied electronic device 10 is controlled by setting an input impedance Zᵢₙ of the wireless power transmission apparatus 1 by adjusting the resonance frequency of at least one of a power-supplying resonator 22 and a power-receiving resonator 32.

## Description

### [Technical Field]

The present invention relates to a wireless power transmission apparatus, a supply power control method for the wireless power transmission apparatus, and a manufacturing method of the wireless power transmission apparatus, by which power transmitted by wireless power transmission is adjustable.

### [Background]

Portable electronic devices such as laptop PCs, tablet PCs, digital cameras, mobile phones, portable gaming devices, earphone-type music players, wireless headsets, hearing aids, recorders, which are portable while being used by the user are rapidly increasing in recent years. Many of such electronic devices have rechargeable batteries which require regular charging. To simplify the charging of a rechargeable battery in an electronic device, a growing number of devices charge the rechargeable battery by a power supplying technology employing wireless power transmission between a power-supplying device and a power-receiving device mounted in the electronic device (a wireless power transmission technology of power transmission by varying a magnetic field) .

Examples of the wireless power transmission technology include power transmission by utilizing electromagnetic induction between coils in the power-supplying device and the power-receiving device (see e. g. , PTL 1) and power transmission by magnetic field coupling utilizing a resonance phenomenon (magnetic field resonant state) between resonators (coils) of the power-supplying device and the power-receiving device (see e.g., PTL 2).

When a power-supplying device and a power-receiving device are designed by using the wireless power transmission technology above, it is required to increase power transmission efficiency which is a ratio of power supplied to the power-supplying device to power received by the power-receiving device, in order to reduce power loss in the wireless power transmission.

In the power-supplying device and the power-receiving device employing the wireless power transmission technology above, it has been known that the power transmission efficiency is maximized by matching the resonance frequency of the coil of the power-supplying device with the resonance frequency of the coil of the power-receiving device. Therefore the devices are typically designed to match the resonance frequency of the coil of the power-supplying device with the resonance frequency of the coil of the power-receiving device in order to maximize the power transmission efficiency.

### [Citation List]

### [Patent Literatures]

[PTL 1] Japanese Patent No. 4624768
[PTL 2] Japanese Unexamined Patent Publication No. 2010-239769

### [Summary of Invention]

### [Technical Problem]

To arrange the resonance frequency of the coil of the power-supplying device to be matched with the resonance frequency of the coil of the power-receiving device, it is necessary to set the capacities of the coils, the capacitors, or the like of the power-supplying device and the power-receiving device at predetermined values.

However, the capacities of the coils, the capacitors, or the like of the power-supplying device and the power-receiving device function as parameters for determining, for example, power supplied to a power-supplied electronic device such as a rechargeable battery which is a power supply target. On this account, the capacities of the coils, the capacitors, or the like are preferably adjustable.

An object of the present invention is therefore to provide a wireless power transmission apparatus, a supply power control method, and a manufacturing method of the wireless power transmission apparatus, by which supply power is controlled by adjusting the resonance frequency of a coil of a power-supplying device and/or the resonance frequency of a coil of a power-receiving device, as the capacities of the coils, capacitors, or the like of the power-supplying device and the power-receiving device, i.e., the resonance frequency of the coil of the power-supplying device and/or the resonance frequency of the coil of the power-receiving device are arranged to be adjustable while power transmission efficiency is maintained.

### [Solution to Problem]

An aspect of the invention for solving the problem above is a supply power control method for a wireless power transmission apparatus which supplies power from a power-supplying module including a power-supplying resonator to a power-receiving module including a power-receiving resonator, by changing a magnetic field,
the power being controlled by setting an input impedance of the wireless power transmission apparatus by adjusting a resonance frequency of at least one of the power-supplying resonator and the power-receiving resonator.

According to the method above, the supply power is adjusted by setting the input impedance of the wireless power transmission apparatus by changing the resonance frequency of at least one of the power-supplying resonator and the power-receiving resonator.

An aspect of the present invention for solving the problem above is the method above, wherein,
either a transmission characteristic relative to a driving frequency of the power supplied to the power-supplying module or a coupling coefficient between the power-supplying resonator and the power-receiving resonator when the resonance frequency of the power-supplying resonator is matched with the resonance frequency of the power-receiving resonator is set as a reference value for determining the power transmission efficiency, and
the power is controlled by setting the input impedance of the wireless power transmission apparatus by adjusting the resonance frequency of at least one of the power-supplying resonator and the power-receiving resonator within a desired range including the reference value.

According to the method above, either the transmission characteristic relative to the driving frequency of the power supplied to the power-supplying module or the coupling coefficient between the power-supplying resonator and the power-receiving resonator when the resonance frequency of the power-supplying resonator is matched with the resonance frequency of the power-receiving resonator is set as a reference value for determining the power transmission efficiency (a rate of power received by the power-receiving module relative to the power supplied to the power-supplying module), and a desired range including the reference value is set with reference to the reference value, and based on this, the resonance frequency of at least one of the power-supplying resonator and the power-receiving resonator is variable within the desired range including the reference value. The supply power is adjusted by setting the input impedance of the wireless power transmission apparatus by changing the resonance frequency of at least one of the power-supplying resonator and the power-receiving resonator, while the power transmission efficiency is maintained.

An aspect of the present invention for solving the problem above is the method above, wherein, the power is supplied from the power-supplying module including at least the power-supplying coil and the power-supplying resonator to the power-receiving module including at least the power-receiving resonator and the power-receiving coil, by a resonance phenomenon.

According to the method above, even in the wireless power transmission apparatus in which power is supplied by the resonance phenomenon from the power-supplying module including the power-supplying coil and the power-supplying resonator to the power-receiving module including the power-receiving resonator and the power-receiving coil, either the transmission characteristic relative to the driving frequency of the power supplied to the power-supplying module or the coupling coefficient k between the power-supplying resonator and the power-receiving resonator when the resonance frequency of the power-supplying resonator is matched with the resonance frequency of the power-receiving resonator is set as a reference value for determining the power transmission efficiency, and a desired range including the reference value is set with reference to the reference value, and based on this, the resonance frequency of at least one of the power-supplying resonator and the power-receiving resonator is variable within the desired range including the reference value. The supply power is adjusted by setting the input impedance of the wireless power transmission apparatus by changing the resonance frequency of at least one of the power-supplying resonator and the power-receiving resonator, while the power transmission efficiency is maintained.

An aspect of the present invention for solving the problem above is the method above, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a lower drive frequency band than the resonance frequencies in the power-supplying module and the power-receiving module, the resonance frequency of the power-supplying resonator is adjusted based on a characteristic that, as the resonance frequency of the power-supplying resonator increases, the input impedance of the wireless power transmission apparatus decreases.

According to the method above, the driving frequency of the power supplied to the power-supplying module is arranged to be in a band corresponding to a peak value of a transmission characteristic occurring in a lower drive frequency band than the resonance frequencies in the power-supplying module and the power-receiving module, while the transmission characteristic relative to the driving frequency has a double-hump characteristic. With this, the characteristic that the input impedance of the wireless power transmission apparatus decreases as the resonance frequency of the power-supplying resonator increases is realized.

This makes it possible to set the input impedance of the wireless power transmission apparatus and adjust the supply power based on the characteristic that the input impedance of the wireless power transmission apparatus decreases as the resonance frequency of the power-supplying resonator increases.

An aspect of the present invention for solving the problem above is the method above, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a lower drive frequency band than the resonance frequencies in the power-supplying module and the power-receiving module, the resonance frequency of the power-supplying resonator is adjusted based on a characteristic that, as the resonance frequency of the power-receiving resonator increases, the input impedance of the wireless power transmission apparatus increases.

According to the method above, the driving frequency of the power supplied to the power-supplying module is arranged to be in a band corresponding to a peak value of a transmission characteristic occurring in a lower drive frequency band than the resonance frequencies in the power-supplying module and the power-receiving module, while the transmission characteristic relative to the driving frequency has a double-hump characteristic. With this, the characteristic that the input impedance of the wireless power transmission apparatus increases as the resonance frequency of the power-supplying resonator increases is realized.

This makes it possible to set the input impedance of the wireless power transmission apparatus and adjust the supply power based on the characteristic that the input impedance of the wireless power transmission apparatus decreases as the resonance frequency of the power-supplying resonator increases.

An aspect of the present invention for solving the problem above is the method above, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a higher drive frequency band than the resonance frequencies in the power-supplying module and the power-receiving module, the resonance frequency of the power-supplying resonator is adjusted based on a characteristic that, as the resonance frequency of the power-supplying resonator increases, the input impedance of the wireless power transmission apparatus increases.

According to the method above, the driving frequency of the power supplied to the power-supplying module is arranged to be in a band corresponding to a peak value of a transmission characteristic occurring in a lower drive frequency band than the resonance frequencies in the power-supplying module and the power-receiving module, while the transmission characteristic relative to the driving frequency has a double-hump characteristic. With this, the characteristic that the input impedance of the wireless power transmission apparatus increases as the resonance frequency of the power-supplying resonator increases is realized.

This makes it possible to set the input impedance of the wireless power transmission apparatus and adjust the supply power based on the characteristic that the input impedance of the wireless power transmission apparatus increases as the resonance frequency of the power-supplying resonator increases.

An aspect of the present invention for solving the problem above is the method above, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a higher drive frequency band than the resonance frequencies in the power-supplying module and the power-receiving module, the resonance frequency of the power-receiving resonator is adjusted based on a characteristic that, as the resonance frequency of the power-receiving resonator increases, the input impedance of the wireless power transmission apparatus decreases.

According to the method above, the driving frequency of the power supplied to the power-supplying module is arranged to be in a band corresponding to a peak value of a transmission characteristic occurring in a lower drive frequency band than the resonance frequencies in the power-supplying module and the power-receiving module, while the transmission characteristic relative to the driving frequency has a double-hump characteristic. With this, the characteristic that the input impedance of the wireless power transmission apparatus decreases as the resonance frequency of the power-receiving resonator increases is realized.

This makes it possible to set the input impedance of the wireless power transmission apparatus and adjust the supply power based on the characteristic that the input impedance of the wireless power transmission apparatus decreases as the resonance frequency of the power-receiving resonator increases.

An aspect of the present invention for solving the problem above is the method above, wherein, each of the power-supplying resonator and the power-receiving resonator includes a capacitor, and the resonance frequencies of the power-supplying resonator and the power-receiving resonator are adjusted by changing the capacity of the capacitor of each of the power-supplying resonator and the power-receiving resonator.

According to the method above, the resonance frequencies of the power-supplying resonator and the power-receiving resonator are adjustable by changing the capacities of the capacitors.

An aspect of the present invention for solving the problem above is a wireless power transmission apparatus adjusted by the supply power control method above.

According to the arrangement above, the adjustment of the supply power in the wireless power transmission by setting the input impedance of the wireless power transmission apparatus is achieved without requiring an additional device. To put it differently, the supply power can be controlled without increasing the number of components of the wireless power transmission apparatus.

An aspect of the present invention for solving the problem above is a manufacturing method of a wireless power transmission apparatus which supplies power from a power-supplying module including a power-supplying resonator to a power-receiving module including a power-receiving resonator, by changing a magnetic field,
either a transmission characteristic relative to a driving frequency of the power supplied to the power-supplying module or a coupling coefficient between the power-supplying resonator and the power-receiving resonator when a resonance frequency of the power-supplying resonator is matched with a resonance frequency of the power-receiving resonator being set as a reference value for determining the power transmission efficiency, and
the power being controlled by setting the input impedance of the wireless power transmission apparatus by adjusting the resonance frequency of at least one of the power-supplying resonator and the power-receiving resonator within a desired range including the reference value.

According to the method above, it is possible to manufacture a wireless power transmission apparatus in which the adjustment of the supply power in the wireless power transmission by setting the input impedance of the wireless power transmission apparatus is achieved without requiring an additional device. To put it differently, it is possible to manufacture a wireless power transmission apparatus in which the supply power can be controlled without increasing the number of components of the wireless power transmission apparatus.

### [Advantageous Effects of Invention]

A wireless power transmission apparatus, a supply power control method, and a manufacturing method of the wireless power transmission apparatus, by which supply power is controlled by adjusting the resonance frequency of a coil of a power-supplying device and/or the resonance frequency of a coil of a power-receiving device, as the capacities of the coils, capacitors, or the like of the power-supplying device and the power-receiving device, i.e., the resonance frequency of the coil of the power-supplying device and/or the resonance frequency of the coil of the power-receiving device are arranged to be adjustable while power transmission efficiency is maintained, are provided.

### [Brief Description of Drawings]

[FIG. 1] FIG. 1 is a schematic explanatory diagram of a wireless power transmission apparatus.
[FIG. 2] FIG. 2 is an explanatory diagram of an equivalent circuit of the wireless power transmission apparatus.
[FIG. 3] FIG. 3 is a graph indicating relation of transmission characteristic "S21" to a driving frequency.
[FIG. 4] FIG. 4 is a table showing measurement results of Example 1.
[FIG. 5] In FIG. 5, (A) is a graph of a transmission characteristic S21 relative to the resonance frequency of a power-receiving resonator of Example 1, whereas (B) is a graph of an input impedance Zᵢₙ relative to the resonance frequency of the power-receiving resonator of Example 1.
[FIG. 6] FIG. 6 is a table showing measurement results of Example 2.
[FIG. 7] In FIG. 7, (A) is a graph of the transmission characteristic S21 relative to the resonance frequency of a power-supplying resonator of Example 2, whereas (B) is a graph of an input impedance Zᵢₙ relative to the resonance frequency of the power-supplying resonator of Example 2.
[FIG. 8] FIG. 8 is an explanatory diagram of a manufacturing method of a wireless power transmission apparatus.
[FIG. 9] FIG. 9 is a flowchart explaining a method for designing a wireless headset and a charger, including the wireless power transmission apparatus.

### [Description of Embodiments]

The following will describe an embodiment of a wireless power transmission apparatus, a supply power control method, and a manufacturing method of the wireless power transmission apparatus of the present invention.

### (Embodiment)

Before the explanation of the supply power control method of the wireless power transmission apparatus and the manufacturing method of the wireless power transmission apparatus, a wireless power transmission apparatus 1 which is designed and manufactured based on the supply power control method or the manufacturing method will be described.

### (Structure of Wireless Power Transmission Apparatus 1)

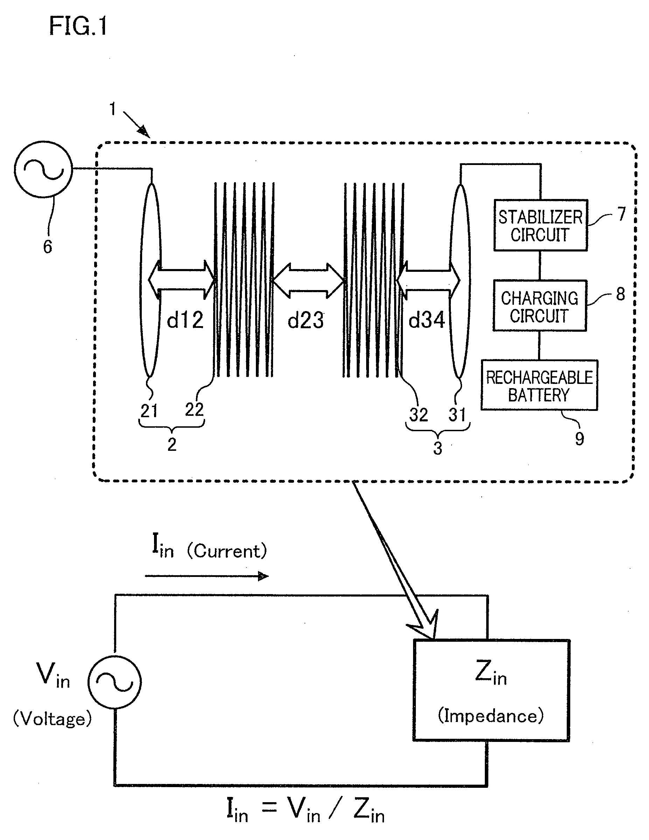

The wireless power transmission apparatus 1 includes: a power-supplying module 2 having a power-supplying coil 21 and a power-supplying resonator 22; and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a rechargeable battery 9 via a stabilizer circuit 7 configured to rectify the AC power received, and a charging circuit 8 configured to prevent overcharge. It should be noted that, in the present embodiment, the stabilizer circuit 7, the charging circuit 8, and the rechargeable battery 9 which are the targets of power supply correspond to a power-supplied electronic device 10.

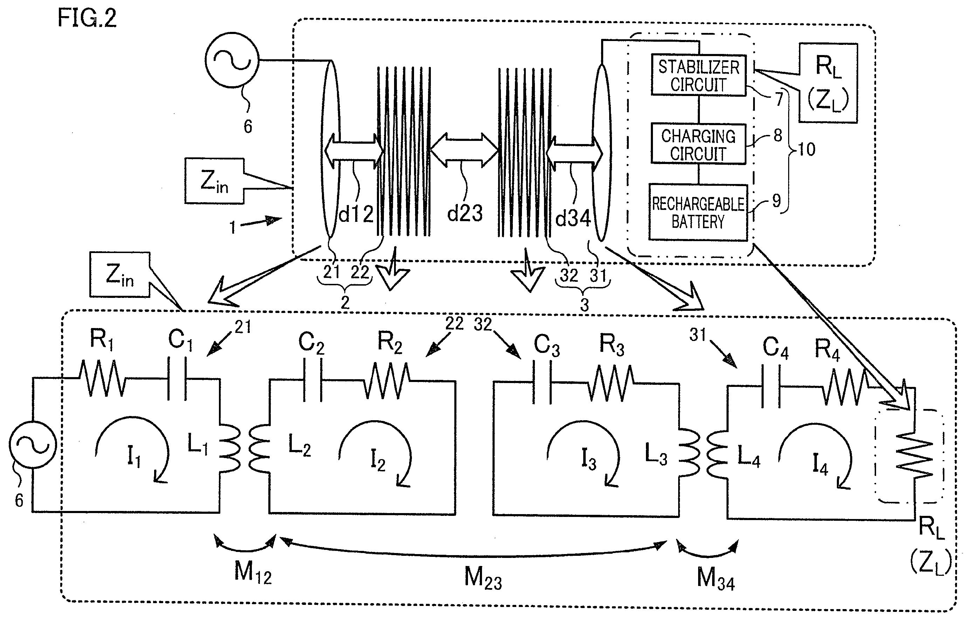

The power-supplying coil 21 plays a role of supplying power obtained from the AC power source 6 to the power-supplying resonator 22 by means of electromagnetic induction. As shown in FIG. 2, the power-supplying coil 21 is constituted by an RLC circuit whose elements include a resistor R₁, a coil L₁, and a capacitor C₁. The coil L₁ is formed of a copper wire material (coated by an insulation film) and arranged to be 15mmφ in coil diameter. The total impedance of a circuit element constituting the power-supplying coil 21 is Z₁. In the present embodiment, the Z₁ is the total impedance of the RLC circuit (circuit element) constituting the power-supplying coil 21, which includes the resistor R₁, the coil L₁, and the capacitor C₁. Furthermore, a current flowing in the power-supplying coil 21 is I₁. The current I₁ is identical with an input current Iᵢₙ input to the wireless power transmission apparatus 1.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 2, the power-receiving coil 31, similarly to the power-supplying coil 21, is constituted by an RLC circuit whose elements include a resistor R₄, a coil L₄, and a capacitor C₄. The coil L₄ is formed of a copper wire material (coated by an insulation film) and is arranged to be 15mmφ in coil diameter. The total impedance of a circuit element constituting the power-receiving coil 31 is Z₄. In the present embodiment, the Z₄ is the total impedance of the RLC circuit (circuit element) constituting the power-receiving coil 31, which includes the resistor R₄, the coil L₄, and the capacitor C₄. In FIG. 2, the load impedance of the stabilizer circuit 7, the charging circuit 8, and the rechargeable battery 9 (power-supplied electronic device 10) connected with the power-receiving coil 31 is Z_{L}. Furthermore, a current flowing in the power-receiving coil 31 is I₄. While the total impedance of the power-supplied electronic device 10 is Z_{L}, this may be substituted by R_{L} for the sake of convenience.

As shown in FIG. 2, the power-supplying resonator 22 is constituted by an RLC circuit whose elements include a resistor R₂, a coil L₂, and a capacitor C₂. Further, as shown in FIG. 2, the power-receiving resonator 32 is constituted by an RLC circuit whose elements include a resistor R₃, a coil L₃, and a capacitor C₃. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils tuned to a resonance frequency. The total impedance of a circuit element constituting the power-supplying resonator 22 is Z₂. In the present embodiment, the Z₂ is the total impedance of the RLC circuit (circuit element) constituting the power-supplying resonator 22, which includes the resistor R₂, the coil L₂, and the capacitor C₂. The total impedance of a circuit element constituting the power-receiving resonator 32 is Z₃. In the present embodiment, the Z₃ is the total impedance of the RLC circuit (circuit element) constituting the power-receiving resonator 32, which includes the resistor R₃, the coil L₃, and the capacitor C₃. A current flowing in the power-supplying resonator 22 is I₂, whereas a current flowing in the power-receiving resonator 32 is I₃.

In the RLC circuit which is the resonance circuit in each of the power-supplying resonator 22 and the power-receiving resonator 32, the resonance frequency is f which is derived from (Formula 1) below, where the inductance is L and the capacity of capacitor is C.

### (Formula 1)

The power-supplying resonator 22 is a solenoid coil formed of a copper wire material (coated by an insulation film) and 15mmφ in coil diameter. The power-receiving resonator 32 is a solenoid coil formed of a copper wire material (coated by an insulation film) and 15mmφ in coil diameter. The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 2, a mutual inductance between the coil L₁ of the power-supplying coil 21 and the coil L₂ of the power-supplying resonator 22 is M₁₂, a mutual inductance between the coil L₂ of the power-supplying resonator 22 and the coil L₃ of the power-receiving resonator 32 is M₂₃, and a mutual inductance between the coil L₃ of the power-receiving resonator 32 and the coil L₄ of the power-receiving coil 31 is M₃₄. Further, in regard to the wireless power transmission apparatus 1, a coupling coefficient between the coil L₁ and the coil L₂ is denoted as K₁₂, a coupling coefficient between the coil L₂ and the coil L₃ is denoted as K₂₃, a coupling coefficient between the coil L₃ and the coil L₄ is denoted as K34.

The resistance values, inductances, capacities of capacitors, and coupling coefficients K₁₂, K₂₃, and K₃₄ of R₁, L₁, and C₁ of the RLC circuit of the power-supplying coil 21, R₂, L₂, and C₂ of the RLC circuit of the power-supplying resonator 22, R₃, L₃, and C₃ of the RLC circuit of the power-receiving resonator 32, and R₄, L₄, and C₄ of the RLC circuit of the power-receiving coil 31 are parameters variable at the stage of designing and manufacturing, and are preferably set so as to satisfy the relational expression of (Formula 3) which is described later.

With the wireless power transmission apparatus 1, when the power-supplying resonator 22 and the power-receiving resonator 32 are resonated with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy.

### (Supply Power Control Method)

In consideration of the structure of the wireless power transmission apparatus 1 above, a supply power control method of adjusting the power supplied by the wireless power transmission apparatus 1 will be described.

FIG. 1 shows at its bottom a circuit diagram of the wireless power transmission apparatus 1 (including: the stabilizer circuit 7, the charging circuit 8, and the rechargeable battery 9) having the structure as described above. In the figure, the entire wireless power transmission apparatus 1 is shown as a single input impedance Zᵢₙ. According to the above, to control the power supplied from the wireless power transmission apparatus 1 to the power-supplied electronic device 10, the voltage Vᵢₙ is kept constant when the AC power source 6 is a typical constant voltage power source, and hence the current Iᵢₙ must be controlled.

The (Formula 2) is a relational expression of the current Iᵢₙ, based on the voltage Vᵢₙ and input impedance Zᵢₙ.

### (Formula 2)

As indicated by (Formula 2), the current Iᵢₙ decreases as the input impedance Zᵢₙ increases, and the current Iᵢₙ increases as the input impedance Zᵢₙ decreases.

To be more specific about the input impedance Zᵢₙ of the wireless power transmission apparatus 1, the structure of the wireless power transmission apparatus 1 is expressed in an equivalent circuit as shown in FIG. 2. Based on the equivalent circuit in FIG. 2, the input impedance Zᵢₙ of the wireless power transmission apparatus 1 is expressed as the (Formula 3).

### (Formula 3)

Further, the impedance Z₁, Z₂, Z₃, Z₄, and Z_{L} of the power-supplying coil 21, the power-supplying resonator 22, the power-receiving resonator 32, and the power-receiving coil 31 in the wireless power transmission apparatus 1 of the present embodiment are expressed as the (Formula 4). ( 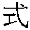 4)

Introducing the (Formula 4) into the (Formula 3) makes the (Formula 5).

### (Formula 5)

This indicates that the power supplied from the wireless power transmission apparatus 1 to the power-supplied electronic device 10 is controllable by adjusting the input impedance Zᵢₙ of the wireless power transmission apparatus 1 calculated by the relational expression of (Formula 5) and changing the current Iᵢₙ, as the resistance values, the inductances, the capacities of the capacitors, and the coupling coefficients k₁₂, k₂₃, and k₃₄ of the R₁, L₁, and C₁ of the RLC circuit of the power-supplying coil 21, the R₂, L₂, and C₂ of the RLC circuit of the power-supplying resonator 22, the R₃, L₃, C₃ of the RLC circuit of the power-receiving resonator 32, and the R₄, L₄, and C₄ of the RLC circuit of the power-receiving coil 31 in (Formula 5) above are set as parameters changeable in the design and/or manufacturing stage.

In regard to the wireless power transmission apparatus 1, it has been known that the power transmission efficiency in the wireless power transmission is maximized by matching the resonance frequency of the power-supplying resonator 22 with the resonance frequency of the power-receiving resonator 32. Therefore these resonators are typically designed to match the resonance frequency of the coil of the power-supplying resonator 22 with the resonance frequency of the coil of the power-receiving resonator 32 in order to maximize the power transmission efficiency. It should be noted that the power transmission efficiency is a rate of power received by the power-receiving module 3, relative to the power supplied to the power-supplying module 2.

On this account, to cause the resonance frequency of the power-supplying resonator 22 to be matched with the resonance frequency of the power-receiving resonator 32, it is necessary to set the inductance and the capacity of capacitor of the RLC circuit (resonance circuit) of the power-supplying resonator 22 and the inductance and the capacity of capacitor of the RLC circuit (resonance circuit) of the power-receiving resonator 32 at predetermined values (see Formula 1). This indicates that, when designing the wireless power transmission apparatus 1, the inductance and the capacity of capacitor of the RLC circuits (resonance circuits) of the power-supplying resonator 22 and the power-receiving resonator 32 are limited. Furthermore, because inductance and the capacity of capacitor of the RLC circuits (resonance circuits) of the power-supplying resonator 22 and the power-receiving resonator 32 function as parameters for determining the power supplied to the power-supplied electronic device 10 such as a rechargeable battery 9 which is a target of power supply, the inductance and the capacity of capacitor of each coil is preferably adjustable.

### (Power Control by Resonance Frequency)

In the present embodiment, to arrange the inductance and the capacity of capacitor of each of the RLC circuits (resonance circuits) of the power-supplying resonator 22 and the power-receiving resonator 32 to be adjustable while maintaining the power transmission efficiency when the resonance frequency of the power-supplying resonator 22 is matched with the resonance frequency of the power-receiving resonator 32, the transmission characteristic S21 relative to the driving frequency of the power supplied to the power-supplying module 2 or the coupling coefficient k₂₃ between the power-supplying resonator 22 and the power-receiving resonator 32 when the resonance frequency of the power-supplying resonator 22 is matched with the resonance frequency of the power-receiving resonator 32 is set as a reference value for determining the power transmission efficiency. Furthermore, a desired range including the reference value is set and the resonance frequencies of the power-supplying resonator 22 and the power-receiving resonator 32 are arranged to be changeable within the desired range including the reference value, so that the inductances and the capacities of the capacitors of the RLC circuits (resonance circuits) of the power-supplying resonator 22 and the power-receiving resonator 32 are arranged to be adjustable. As the resonance frequencies of the power-supplying resonator 22 and/or the power-receiving resonator 32 are adjusted, the input impedance of the wireless power transmission apparatus 1 is adjusted and the power supplied to the power-supplied electronic device 10 is controlled, while the power transmission efficiency is maintained.

Now, the following will describe, as Example 1, a control method of the power supplied to the power-supplied electronic device 10 when the resonance frequency of the power-receiving resonator 32 is changed, and as Example 2, a control method of the power supplied to the power-supplied electronic device 10 when the resonance frequency of the power-supplying resonator 22 is changed.

### (Example 1)

The wireless power transmission apparatus 1 in Example 1 was arranged such that the values of the R₁, R₂, R₃, and R₄ were set at 0.5Ω, 0.5Ω, 0.5Ω, and 0.5Ω, respectively. Furthermore, the values of the L₁, L₂, L₃, and L₄ were set at 4.5µH, 4.5µH, 4.5*H, and 4.5µH, respectively. The coupling coefficients k₁₂ and k₃₄ were set at 0.189 and 0.189, respectively. The resonance frequency of the power-supplying resonator 22 was (fixedly) set at 1.003MHz. In addition to the above, the wireless power transmission apparatus 1 was connected to a network analyzer (E5061B made by Agilent Technologies, Inc. in the present embodiment), and the coupling coefficient k₂₃ between the power-supplying resonator 22 and the power-receiving resonator 32, a transmission characteristic S21 (detailed later) and the input impedance Zᵢₙ when the wireless power transmission apparatus 1 was set in a double-hump inphase resonance mode, and a transmission characteristic S21 (detailed later) and the input impedance Zᵢₙ when the wireless power transmission apparatus 1 was set in a double-hump antiphase resonance mode were measured while the resonance frequency of the power-receiving resonator 32 was changed.

In the Measurement Experiments are used wireless power transmission apparatus 1 with a double-hump transmission characteristic "S21" relative to the driving frequency of the power supplied to the wireless power transmission apparatus 1.

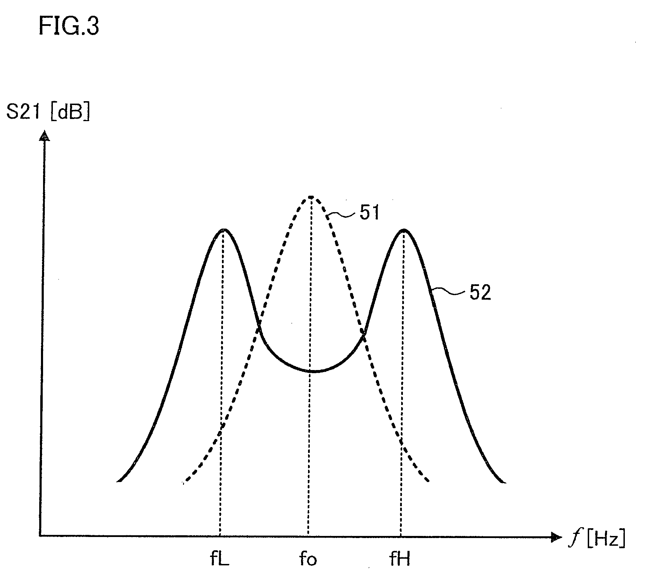

Transmission characteristic S21 is signal values measured by a network analyzer connected to the wireless power transmission apparatus 1, and is indicated in decibel. The greater the value, the higher the power transmission efficiency. The transmission characteristic "S21" of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying resonator 22 and the power-receiving resonator 32. The single-hump characteristic means the transmission characteristic "S21" relative to the driving frequency has a single peak which occurs in the resonance frequency band (f0 (See dotted line 51 FIG. 3). The double-hump characteristic on the other hand means the transmission characteristic S21 relative to the driving frequency has two peaks, one of the peaks occurring in a drive frequency band (fL) lower than the resonance frequency, and the other occurring in a drive frequency band (fH) higher than the resonance frequency (See solid line 52 in FIG. 3). The double-hump characteristic, to be more specific, means that the reflection characteristic "S11" measured with the network analyzer 110 connected to the wireless power transmission apparatus 1 has two peaks. Therefore, even if the transmission characteristic S21 relative to the driving frequency appears to have a single peak, the transmission characteristic "S21" has a double-hump characteristic if the reflection characteristic "S11" measured has two peaks.

In a wireless power transmission apparatus 1 having the single-hump characteristic, the transmission characteristic "S21" is maximized (power transmission efficiency is maximized) when the driving frequency is at the resonance frequency f0, as indicated by the dotted line 51 of FIG. 3.

On the other hand, in a wireless power transmission apparatus 1 having the double-hump characteristic, the transmission characteristic "S21" is maximized in a driving frequency band (fL) lower than the resonance frequency f0, and in a driving frequency band (fH) higher than the resonance frequency f0, as indicated by the solid line 52 of FIG. 3.

It should be noted that, in general, if the distance between the power-supplying resonator and the power-receiving resonator is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at f0) (See graph in FIG. 3).

Specifically, in cases of double-hump characteristic, when the driving frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 3, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g., the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field are placed in this magnetic field space, occurrence of Eddy Current attributed to the magnetic field is restrained or prevented for these members. This restrains negative effects due to generation of heat.

On the other hand, in cases of double-hump characteristic, when the driving frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 3, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g., the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field are placed in this magnetic field space, occurrence of Eddy Current attributed to the magnetic field is restrained or prevented for these members. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the wireless power transmission apparatus 1 itself more compact, and improves the freedom in designing.

In this example, to cause the transmission characteristic S21 of the wireless power transmission apparatus 1 to have a double-hump characteristic, variable parameters for constructing the power-supplying module 2 and the power-receiving module 3, such as the resistance values, inductances, capacities of capacitors, and coupling coefficients K₁₂, K₂₃, and K₃₄ of R₁, L₁, and C₁ of the RLC circuit of the power-supplying coil 21, R₂, L₂, and C₂ of the RLC circuit of the power-supplying resonator 22, R₃, L₃, and C₃ of the RLC circuit of the power-receiving resonator 32, and R₄, L₄, and C₄ of the RLC circuit of the power-receiving coil 31, were set.

As described above, the resonance frequency of the power-supplying resonator 22 was set at 1.003MHz and the resonance frequency of the power-receiving resonator 32 was changed, and the transmission characteristic S21 and the input impedance Zᵢₙ when the wireless power transmission apparatus 1 was in the double-hump inphase resonance mode and the transmission characteristic S21 and the input impedance Zᵢₙ when the wireless power transmission apparatus 1 was set in the double-hump antiphase resonance mode were measured. The coupling coefficient k₂₃ was calculated by (Formula 6) when the transmission characteristic S21 of the wireless power transmission apparatus 1 relative to the driving frequency of the power supplied to the wireless power transmission apparatus 1 had a double-hump characteristic. The coupling coefficient k₂₃ was a standard indicating the strength of the coupling between the power-supplying resonator 22 and the power-receiving resonator 32.

### (Formula 6)

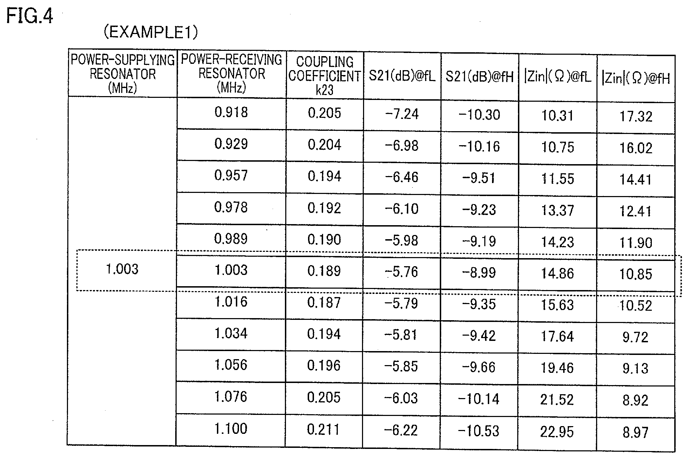

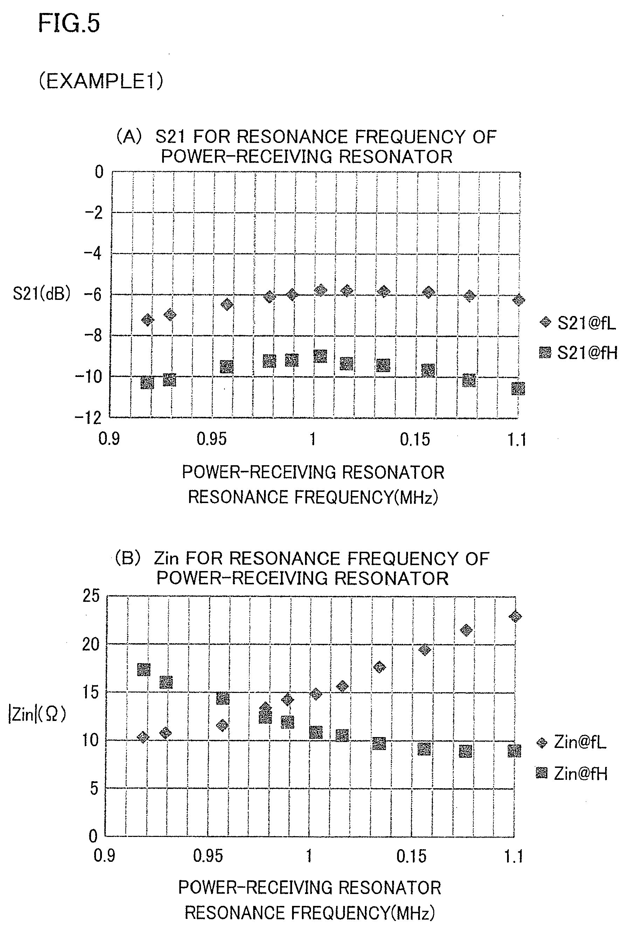

Based on the above, measurement results of Example 1 were as shown in FIG. 4. In addition to this, (A) in FIG. 5 shows a graph of the transmission characteristic S21 (vertical axis: diamond symbols) when the wireless power transmission apparatus 1 was set in the double-hump inphase resonance mode and the transmission characteristic S21 (vertical axis : square symbols) when the wireless power transmission apparatus 1 was set in the double-hump antiphase resonance mode, in case where the resonance frequency of the power-supplying resonator 22 was set at 1.003MHz and the resonance frequency (horizontal axis) of the power-receiving resonator 32 was changed. In the meanwhile, (B) in FIG. 5 shows a graph of the input impedance Zᵢₙ (vertical axis: diamond symbols) when the wireless power transmission apparatus 1 was set in the double-hump inphase resonance mode and the input impedance Zᵢₙ (vertical axis: square symbols) when the wireless power transmission apparatus 1 was set in the double-hump antiphase resonance mode, when the resonance frequency of the power-supplying resonator 22 was set at 1.003MHz and the resonance frequency (horizontal axis) of the power-receiving resonator 32 was changed.

### (When Transmission Characteristic S21 Is at Reference Value: Inphase Resonance Mode)

The following will describe a case where the transmission characteristic S21 was set at a reference value and the inphase resonance mode was set. To begin with, the reference value was set at -5.76dB which was a value of the transmission characteristic (see S21 (dB)@fL in FIG. 4) when the resonance frequency of the power-supplying resonator 22 and the resonance frequency of the power-receiving resonator 32 were both set at 1.003MHz and the wireless power transmission apparatus 1 was set in the double-hump inphase resonance mode. As indicated by FIG. 4 and (A) in FIG. 5, the transmission characteristic was highest and the power transmission efficiency was best when the resonance frequency of the power-supplying resonator 22 and the resonance frequency of the power-receiving resonator 32 were both set at 1.003MHz. Subsequently, a desired range of the transmission characteristic including the reference value -5.76dB was set. (This desired range of the transmission characteristic can be arbitrarily set by adjusting the specification of the power-supplied electronic device 10 or the like). This is equivalent to the setting of a range of allowable power transmission efficiencies. In the present embodiment, the lower limit is set at -6. 10dB as a value which does not adversely affect the power transmission efficiency when power is supplied to the rechargeable battery 9. On this account, the desired range of the transmission characteristic including the reference value was set at -6.10 to -5.76dB.

When the desired range of the transmission characteristic including the reference value was set at -6.10 to -5.76dB, the variable range of the resonance frequency of the power-receiving resonator 32 was set at 0.978 to 1.076MHz with reference to "S21 (dB)@fL" and "power-receiving resonator (MHz)" in FIG. 4. Therefore the inductance and the capacity of the capacitor of the RLC circuit (resonance circuit) of the power-receiving resonator 32 became adjustable to the extent that the resonance frequency of the power-receiving resonator 32 fell within the range of 0.978 to 1.076MHz.

Furthermore, when, as described above, the resonance frequency of the power-receiving resonator 32 was increased while the wireless power transmission apparatus 1 was set in the double-hump inphase resonance mode and the resonance frequency of the power-supplying resonator 22 was fixed at 1.003MHz, the input impedance Zᵢₙ of the wireless power transmission apparatus 1 was increased as indicated by "|Zᵢₙ|(Ω)@fL" in FIG. 4 and the diamond symbols in (B) in FIG. 5.

On this account, based on the characteristic above that the input impedance Zᵢₙ of the wireless power transmission apparatus 1 increases as the resonance frequency of the power-receiving resonator 32 increases, the power supplied from the wireless power transmission apparatus 1 to the power-supplied electronic device 10 is controlled in such a way that the resonance frequency of the power-receiving resonator 32 is adjusted in the range of 0.978 to 1.076MHz so that the input impedance Zᵢₙ of the wireless power transmission apparatus 1 is adjusted and the current Iᵢₙ is changed. For example, the input impedance Zᵢₙ of the wireless power transmission apparatus 1 increases and the current Iᵢₙ decreases when the resonance frequency of the power-receiving resonator 32 is changed from 0.978MHz to 1.076MHz, and hence the power supplied from the wireless power transmission apparatus 1 to the power-supplied electronic device 10 is reduced.

### (When Transmission Characteristic S21 Is at Reference Value: Antiphase Resonance Mode)

The following will describe a case where the transmission characteristic S21 was set at a reference value and the antiphase resonance mode was set. To begin with, the reference value was set at -8.99dB which was a value of the transmission characteristic (see S21 (dB)@fH in FIG. 4) when the resonance frequency of the power-supplying resonator 22 and the resonance frequency of the power-receiving resonator 32 were both set at 1.003MHz and the wireless power transmission apparatus 1 was set in the double-hump antiphase resonance mode. Subsequently, a desired range of the transmission characteristic including the reference value -8.99dB was set. (This desired range of the transmission characteristic can be arbitrarily set by adjusting the specification of the power-supplied electronic device 10 or the like). This is equivalent to the setting of a range of allowable power transmission efficiencies. In the present embodiment, the lower limit is set at -9.42dB as a value which does not adversely affect the power transmission efficiency when power is supplied to the rechargeable battery 9. On this account, the desired range of the transmission characteristic including the reference value was set at -9.42 to -8.99dB.

When the desired range of the transmission characteristic including the reference value was set at -9.42 to -8.99dB, the variable range of the resonance frequency of the power-receiving resonator 32 was set at 0.978 to 1.034MHz with reference to "S21 (dB)@fH" and "power-receiving resonator (MHz)" in FIG. 4. Therefore the inductance and the capacity of the capacitor of the RLC circuit (resonance circuit) of the power-receiving resonator 32 became adjustable to the extent that the resonance frequency of the power-receiving resonator 32 fell within the range of 0.978 to 1.034MHz.

Furthermore, when, as described above, the resonance frequency of the power-receiving resonator 32 was increased while the wireless power transmission apparatus 1 was set in the double-hump antiphase resonance mode and the resonance frequency of the power-supplying resonator 22 was fixed at 1.003MHz, the input impedance Zᵢₙ of the wireless power transmission apparatus 1 was decreased as indicated by "|Zᵢₙ|(Ω)@fH" in FIG. 4 and the square symbols in (B) in FIG. 5.

On this account, based on the characteristic above that the input impedance Zᵢₙ of the wireless power transmission apparatus 1 decreases as the resonance frequency of the power-receiving resonator 32 increases, the power supplied from the wireless power transmission apparatus 1 to the power-supplied electronic device 10 is controlled in such a way that the resonance frequency of the power-receiving resonator 32 is adjusted in the range of 0.978 to 1.034MHz so that the input impedance Zᵢₙ of the wireless power transmission apparatus 1 is adjusted and the current Iᵢₙ is changed. For example, the input impedance Zᵢₙ of the wireless power transmission apparatus 1 decreases and the current Iᵢₙ increases when the resonance frequency of the power-receiving resonator 32 is changed from 0.978MHz to 1.034MHz, and hence the power supplied from the wireless power transmission apparatus 1 to the power-supplied electronic device 10 is increased.

### (When Coupling Coefficient k₂₃ Is Set As Reference Value)

The following will describe a case where the coupling coefficient k₂₃ is set as a reference value. To begin with, the reference value was set at 0.189 which was a value of the coupling coefficient k₂₃ (see the coupling coefficient k₂₃ in FIG. 4) between the power-supplying resonator 22 and the power-receiving resonator 32 when the resonance frequency of the power-supplying resonator 22 and the resonance frequency of the power-receiving resonator 32 were both set at 1. 003MHz. Subsequently, a desired range of the coupling coefficient k₂₃ including the reference value 0.189 was set. (This desired range of the coupling coefficient k₂₃ can be arbitrarily set by adjusting the specification of the power-supplied electronic device 10 or the like). This is equivalent to the setting of a range of allowable power transmission efficiencies. In the present embodiment, the lower limit and the upper limit of the desired range of the coupling coefficient k₂₃ including the reference value are set at 0.187 and 0.194, respectively, as values which do not adversely affect the power transmission efficiency when power is supplied to the rechargeable battery 9.

When the desired range of the coupling coefficient k₂₃ including the reference value was set at 0.187 to 0.194, the variable range of the resonance frequency of the power-receiving resonator 32 was set at 0.957 to 1.034MHz with reference to "coupling coefficient k₂₃ and "power-receiving resonator (MHz)" in FIG. 4. Therefore the inductance and the capacity of the capacitor of the RLC circuit (resonance circuit) of the power-receiving resonator 32 became adjustable to the extent that the resonance frequency of the power-receiving resonator 32 fell within the range of 0.957 to 1.034MHz.

Furthermore, when the resonance frequency of the power-receiving resonator 32 was increased while the wireless power transmission apparatus 1 was set in the double-hump inphase resonance mode and the resonance frequency of the power-supplying resonator 22 was fixed at 1.003MHz, the input impedance Zᵢₙ of the wireless power transmission apparatus 1 was increased as indicated by "|Zᵢₙ|(Ω)@fL" in FIG. 4 and the diamond symbols in (B) in FIG. 5.

As such, based on the characteristic above that the input impedance Zᵢₙ of the wireless power transmission apparatus 1 increases as the resonance frequency of the power-receiving resonator 32 increases, the power supplied from the wireless power transmission apparatus 1 to the power-supplied electronic device 10 is controlled in such a way that the resonance frequency of the power-receiving resonator 32 is adjusted in the range of 0.957 to 1.034MHz so that the input impedance Zᵢₙ of the wireless power transmission apparatus 1 is adjusted and the current Iᵢₙ is changed. For example, the input impedance Zᵢₙ of the wireless power transmission apparatus 1 increases and the current Iᵢₙ decreases when the resonance frequency of the power-receiving resonator 32 is changed from 0.957MHzMHz to 1.034MHz, and hence the power supplied from the wireless power transmission apparatus 1 to the power-supplied electronic device 10 is reduced.

In the meanwhile, when the resonance frequency of the power-receiving resonator 32 was increased while the wireless power transmission apparatus 1 was set in the double-hump antiphase resonance mode and the resonance frequency of the power-supplying resonator 22 was fixed at 1.003MHz, the input impedance Zᵢₙ of the wireless power transmission apparatus 1 was decreased as indicated by "|Zᵢₙ|(Ω)@fH" in FIG. 4 and the square symbols in (B) in FIG. 5.

On this account, based on the characteristic above that the input impedance Zᵢₙ of the wireless power transmission apparatus 1 decreases as the resonance frequency of the power-receiving resonator 32 increases, the power supplied from the wireless power transmission apparatus 1 to the power-supplied electronic device 10 is controlled in such a way that the resonance frequency of the power-receiving resonator 32 is adjusted in the range of 0.957 to 1.034MHz so that the input impedance Zᵢₙ of the wireless power transmission apparatus 1 is adjusted and the current Iᵢₙ is changed. For example, the input impedance Zᵢₙ of the wireless power transmission apparatus 1 decreases and the current Iᵢₙ increases when the resonance frequency of the power-receiving resonator 32 is changed from 0.957MHz to 1.034MHz, and hence the power supplied from the wireless power transmission apparatus 1 to the power-supplied electronic device 10 is increased.

Either the transmission characteristic S21 relative to the driving frequency of the power supplied to the power-supplying module 2 or the coupling coefficient k₂₃ between the power-supplying resonator 22 and the power-receiving resonator 32 is used as the reference value for determining the power transmission efficiency. One of these two options is freely chosen as the reference value in the design stage of the wireless power transmission apparatus 1.

### (Example 2)

The wireless power transmission apparatus 1 in Example 2 is identical with the apparatus 1 in Example 1. In Example 2, the resonance frequency of the power-receiving resonator 32 was set (fixed) at 1.003MHz. Being similar to Example 1, the wireless power transmission apparatus 1 was connected to a network analyzer, and the coupling coefficient k₂₃ between the power-supplying resonator 22 and the power-receiving resonator 32, a transmission characteristic S21 and the input impedance Zᵢₙ when the wireless power transmission apparatus 1 was set in a double-hump inphase resonance mode, and a transmission characteristic S21 and the input impedance Zᵢₙ when the wireless power transmission apparatus 1 was set in a double-hump antiphase resonance mode were measured while the resonance frequency of the power-supplying resonator 22 was changed.

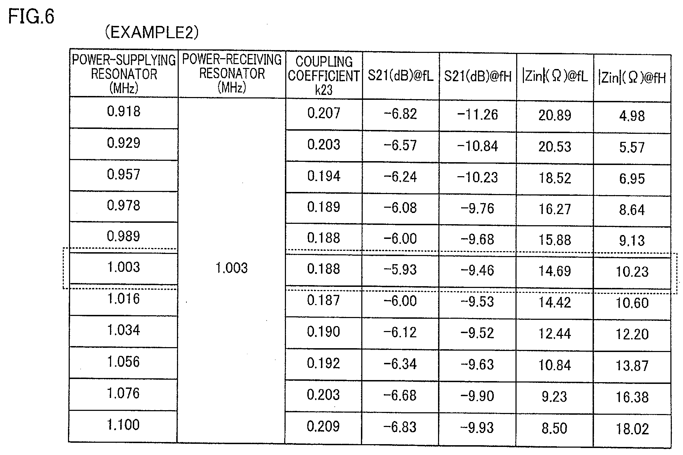

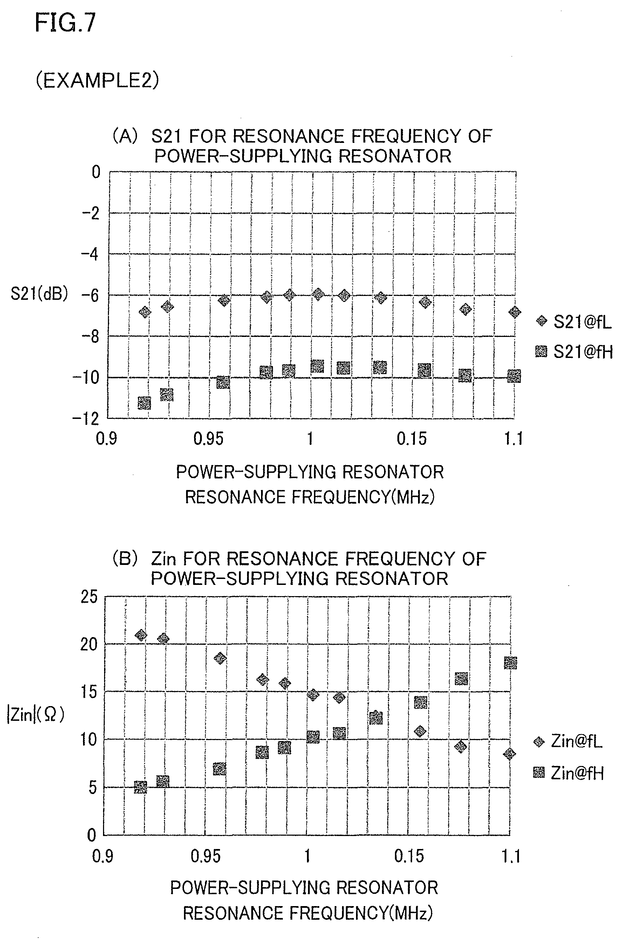

Measurement results of Example 2 were as shown in FIG. 6. In addition to this, (A) in FIG. 7 shows a graph of the transmission characteristic S21 (vertical axis: diamond symbols) when the wireless power transmission apparatus 1 was set in the double-hump inphase resonance mode and the transmission characteristic S21 (vertical axis: square symbols) when the wireless power transmission apparatus 1 was set in the double-hump antiphase resonance mode, in case where the resonance frequency of the power-receiving resonator 32 was set (fixed) at 1.003MHz and the resonance frequency (horizontal axis) of the power-supplying resonator 22 was changed. In the meanwhile, (B) in FIG. 7 shows a graph of the input impedance Zᵢₙ(vertical axis: diamond symbols) when the wireless power transmission apparatus 1 was set in the double-hump inphase resonance mode and the input impedance Zᵢₙ(vertical axis: square symbols) when the wireless power transmission apparatus 1 was set in the double-hump antiphase resonance mode, when the resonance frequency of the power-receiving resonator 32 was set at 1.003MHz and the resonance frequency (horizontal axis) of the power-supplying resonator 22 was changed.

(When Transmission Characteristic S21 Is at Reference Value: Inphase Resonance Mode)

The following will describe a case where the transmission characteristic S21 was set at a reference value and the inphase resonance mode was set. To begin with, the reference value was set at -5.93dB which was a value of the transmission characteristic (see S21 (dB)@fL in FIG. 6) when the resonance frequency of the power-supplying resonator 22 and the resonance frequency of the power-receiving resonator 32 were both set at 1.003MHz and the wireless power transmission apparatus 1 was set in the double-hump inphase resonance mode. As indicated by FIG. 6 and (A) in FIG. 7, the transmission characteristic was highest and the power transmission efficiency was best when the resonance frequency of the power-supplying resonator 22 and the resonance frequency of the power-receiving resonator 32 were both set at 1.003MHz. Subsequently, a desired range of the transmission characteristic including the reference value -5.93dB was set. (This desired range of the transmission characteristic can be arbitrarily set by adjusting the specification of the power-supplied electronic device 10 or the like). This is equivalent to the setting of a range of allowable power transmission efficiencies. In the present embodiment, the lower limit is set at -6.34dB as a value which does not adversely affect the power transmission efficiency when power is supplied to the rechargeable battery 9. On this account, the desired range of the transmission characteristic including the reference value was set at -6.34 to -5.93dB.

When the desired range of the transmission characteristic including the reference value was set at-6.34 to -5.93dB, the variable range of the resonance frequency of the power-supplying resonator 22 was set at 0.957 to 1.056MHz with reference to "S21 (dB)@fL" and "power-receiving resonator (MHz)" in FIG. 6. Therefore the inductance and the capacity of the capacitor of the RLC circuit (resonance circuit) of the power-supplying resonator 22 became adjustable to the extent that the resonance frequency of the power-supplying resonator 22 fell within the range of 0.957 to 1.056MHz.

Furthermore, when, as described above, the resonance frequency of the power-supplying resonator 22 was increased while the wireless power transmission apparatus 1 was set in the double-hump inphase resonance mode and the resonance frequency of the power-receiving resonator 32 was fixed at 1.003MHz, the input impedance Zᵢₙ of the wireless power transmission apparatus 1 was decreased as indicated by "|Zᵢₙ|(Ω)@fL" in FIG. 6 and the diamond symbols in (B) in FIG. 7.

On this account, based on the characteristic above that the input impedance Zᵢₙ of the wireless power transmission apparatus 1 decreases as the resonance frequency of the power-supplying resonator 22 increases, the power supplied from the wireless power transmission apparatus 1 to the power-supplied electronic device 10 is controlled in such a way that the resonance frequency of the power-supplying resonator 22 is adjusted in the range of 0.957 to 1.056MHz so that the input impedance Zᵢₙ of the wireless power transmission apparatus 1 is adjusted and the current Iᵢₙ is changed. For example, the input impedance Zᵢₙ of the wireless power transmission apparatus 1 decreases and the current Iᵢₙ increases when the resonance frequency of the power-supplying resonator 22 is changed from 0.957MHz to 1.056MHz, and hence the power supplied from the wireless power transmission apparatus 1 to the power-supplied electronic device 10 is increased.

### (When Transmission Characteristic S21 Is at Reference Value: Antiphase Resonance Mode)

The following will describe a case where the transmission characteristic S21 was set at a reference value and the antiphase resonance mode was set. To begin with, the reference value was set at -9.46dB which was a value of the transmission characteristic (see S21 (dB)@fH in FIG. 6) when the resonance frequency of the power-supplying resonator 22 and the resonance frequency of the power-receiving resonator 32 were both set at 1.003MHz and the wireless power transmission apparatus 1 was set in the double-hump antiphase resonance mode. Subsequently, a desired range of the transmission characteristic including the reference value -9.46dB was set. (This desired range of the transmission characteristic can be arbitrarily set by adjusting the specification of the power-supplied electronic device 10 or the like). This is equivalent to the setting of a range of allowable power transmission efficiencies. In the present embodiment, the lower limit is set at -9.76dB as a value which does not adversely affect the power transmission efficiency when power is supplied to the rechargeable battery 9. On this account, the desired range of the transmission characteristic including the reference value was set at -9.76 to -9.46dB.

When the desired range of the transmission characteristic including the reference value was set at -9.76 to -9.46dB, the variable range of the resonance frequency of the power-supplying resonator 22 was set at 0.978 to 1.056MHz with reference to "S21 (dB)@fH" and "power-supplying resonator (MHz)" in FIG. 6. Therefore the inductance and the capacity of the capacitor of the RLC circuit (resonance circuit) of the power-supplying resonator 22 became adjustable to the extent that the resonance frequency of the power-supplying resonator 22 fell within the range of 0.978 to 1.056MHz.

Furthermore, when, as described above, the resonance frequency of the power-supplying resonator 22 was increased while the wireless power transmission apparatus 1 was set in the double-hump antiphase resonance mode and the resonance frequency of the power-receiving resonator 32 was fixed at 1.003MHz, the input impedance Zᵢₙ of the wireless power transmission apparatus 1 was increased as indicated by "|Zᵢₙ|(Ω)@fH" in FIG. 6 and the square symbols in (B) in FIG. 7.

On this account, based on the characteristic above that the input impedance Zᵢₙ of the wireless power transmission apparatus 1 increases as the resonance frequency of the power-supplying resonator 22 increases, the power supplied from the wireless power transmission apparatus 1 to the power-supplied electronic device 10 is controlled in such a way that the resonance frequency of the power-supplying resonator 22 is adjusted in the range of 0.978 to 1.056MHz so that the input impedance Zᵢₙ of the wireless power transmission apparatus 1 is adjusted and the current Iᵢₙ is changed. For example, the input impedance Zᵢₙ of the wireless power transmission apparatus 1 increases and the current Iᵢₙ decreases when the resonance frequency of the power-supplying resonator 22 is changed from 0.978MHz to 1.056MHz, and hence the power supplied from the wireless power transmission apparatus 1 to the power-supplied electronic device 10 is decreased.

### (When Coupling Coefficient k₂₃ Is Set As Reference Value)

The following will describe a case where the coupling coefficient k₂₃ is set as a reference value. To begin with, the reference value was set at 0.188 which was a value of the coupling coefficient k₂₃ (see the coupling coefficient k₂₃ in FIG. 6) between the power-supplying resonator 22 and the power-receiving resonator 32 when the resonance frequency of the power-supplying resonator 22 and the resonance frequency of the power-receiving resonator 32 were both set at 1. 003MHz. Subsequently, a desired range of the coupling coefficient k₂₃ including the reference value 0.188 was set. (This desired range of the coupling coefficient k₂₃ can be arbitrarily set by adjusting the specification of the power-supplied electronic device 10 or the like). This is equivalent to the setting of a range of allowable power transmission efficiencies. In the present embodiment, the lower limit and the upper limit of the desired range of the coupling coefficient k₂₃ including the reference value are set at 0.187 and 0.194, respectively, as values which do not adversely affect the power transmission efficiency when power is supplied to the rechargeable battery 9.

When the desired range of the coupling coefficient k₂₃ including the reference value was set at 0.187 to 0.194, the variable range of the resonance frequency of the power-supplying resonator 22 was set at 0.957 to 1.056MHz with reference to "coupling coefficient k₂₃ and "power-supplying resonator (MHz)" in FIG. 6. Therefore the inductance and the capacity of the capacitor of the RLC circuit (resonance circuit) of the power-supplying resonator 22 became adjustable to the extent that the resonance frequency of the power-supplying resonator 22 fell within the range of 0.957 to 1.056MHz.

Furthermore, when the resonance frequency of the power-supplying resonator 22 was increased while the wireless power transmission apparatus 1 was set in the double-hump inphase resonance mode and the resonance frequency of the power-receiving resonator 32 was fixed at 1.003MHz, the input impedance Zᵢₙ of the wireless power transmission apparatus 1 was decreased as indicated by "|Zᵢₙ|(Ω)@fL" in FIG. 6 and the diamond symbols in (B) in FIG. 7.

As such, based on the characteristic above that the input impedance Zᵢₙ of the wireless power transmission apparatus 1 decreases as the resonance frequency of the power-supplying resonator 22 increases, the power supplied from the wireless power transmission apparatus 1 to the power-supplied electronic device 10 is controlled in such a way that the resonance frequency of the power-supplying resonator 22 is adjusted in the range of 0.957 to 1.056MHz so that the input impedance Zᵢₙ of the wireless power transmission apparatus 1 is adjusted and the current Iᵢₙ is changed. For example, the input impedance Zᵢₙ of the wireless power transmission apparatus 1 decreases and the current Iᵢₙ increases when the resonance frequency of the power-supplying resonator 22 is changed from 0.957MHzMHz to 1.056MHz, and hence the power supplied from the wireless power transmission apparatus 1 to the power-supplied electronic device 10 is increased.

In the meanwhile, when the resonance frequency of the power-supplying resonator 22 was increased while the wireless power transmission apparatus 1 was set in the double-hump antiphase resonance mode and the resonance frequency of the power-receiving resonator 32 was fixed at 1.003MHz, the input impedance Zᵢₙ of the wireless power transmission apparatus 1 was increased as indicated by "|Zᵢₙ|(Ω)@fH" in FIG. 6 and the square symbols in (B) in FIG. 7.

On this account, based on the characteristic above that the input impedance Zᵢₙ of the wireless power transmission apparatus 1 increases as the resonance frequency of the power-supplying resonator 22 increases, the power supplied from the wireless power transmission apparatus 1 to the power-supplied electronic device 10 is controlled in such a way that the resonance frequency of the power-supplying resonator 22 is adjusted in the range of 0.957 to 1.056MHz so that the input impedance Zᵢₙ of the wireless power transmission apparatus 1 is adjusted and the current Iᵢₙ is changed. For example, the input impedance Zᵢₙ of the wireless power transmission apparatus 1 increases and the current Iᵢₙ decreases when the resonance frequency of the power-supplying resonator 22 is changed from 0.957MHz to 1.056MHz, and hence the power supplied from the wireless power transmission apparatus 1 to the power-supplied electronic device 10 is decreased.

As described above, according to the method above, the supply power is adjusted by setting the input impedance Zᵢₙ of the wireless power transmission apparatus 1 by changing the resonance frequency of at least one of the power-supplying resonator 22 and the power-receiving resonator 32.

Furthermore, according to the method above, either the transmission characteristic relative to the driving frequency of the power supplied to the power-supplying module 2 or the coupling coefficient k₂₃ between the power-supplying resonator 22 and the power-receiving resonator 32 when the resonance frequency of the power-supplying resonator 22 is matched with the resonance frequency of the power-receiving resonator 32 is set as a reference value for determining the power transmission efficiency, and a desired range including the reference value is set with reference to the reference value, and based on this, the resonance frequency of at least one of the power-supplying resonator 22 and the power-receiving resonator 32 is variable within the desired range including the reference value. By changing the resonance frequency of at least one of the power-supplying resonator 22 and the power-receiving resonator 32, the supply power is adjustable by setting the input impedance Zᵢₙ of the wireless power transmission apparatus 1, while the power transmission efficiency is maintained.

Furthermore, according to the method above, even in the wireless power transmission apparatus 1 in which power is supplied by the resonance phenomenon from the power-supplying module 2 including the power-supplying coil 21 and the power-supplying resonator 22 to the power-receiving module 3 including the power-receiving resonator 32 and the power-receiving coil 31, either the transmission characteristic relative to the driving frequency of the power supplied to the power-supplying module 2 or the coupling coefficient k₂₃ between the power-supplying resonator 22 and the power-receiving resonator 32 when the resonance frequency of the power-supplying resonator 22 is matched with the resonance frequency of the power-receiving resonator 32 is set as a reference value for determining the power transmission efficiency, and a desired range including the reference value is set with reference to the reference value, and based on this, the resonance frequency of at least one of the power-supplying resonator 22 and the power-receiving resonator 32 is variable within the desired range including the reference value. By changing the resonance frequency of at least one of the power-supplying resonator 22 and the power-receiving resonator 32, the supply power is adjustable by setting the input impedance Zᵢₙ of the wireless power transmission apparatus 1, while the power transmission efficiency is maintained.

Furthermore, according to the method above, the resonance frequencies of the power-supplying resonator 22 and the power-receiving resonator 32 are adjustable by changing the capacities of the capacitors of the respective resonators. The resonance frequencies of the power-supplying resonator 22 and the power-receiving resonator 32 may be adjusted by changing the inductances of the coils of the respective resonators.

### (Manufacturing Method)

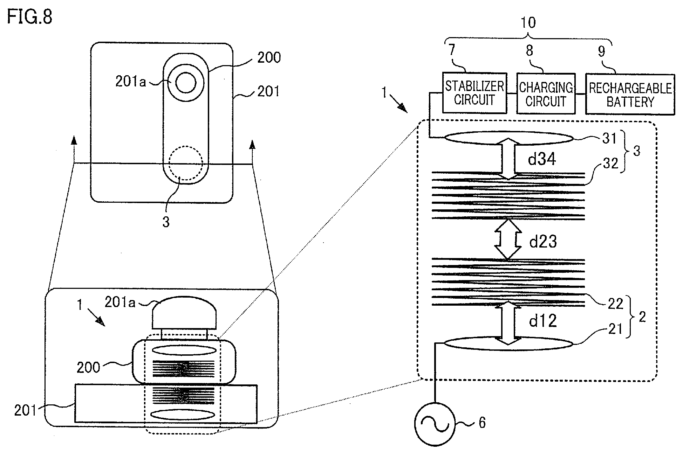

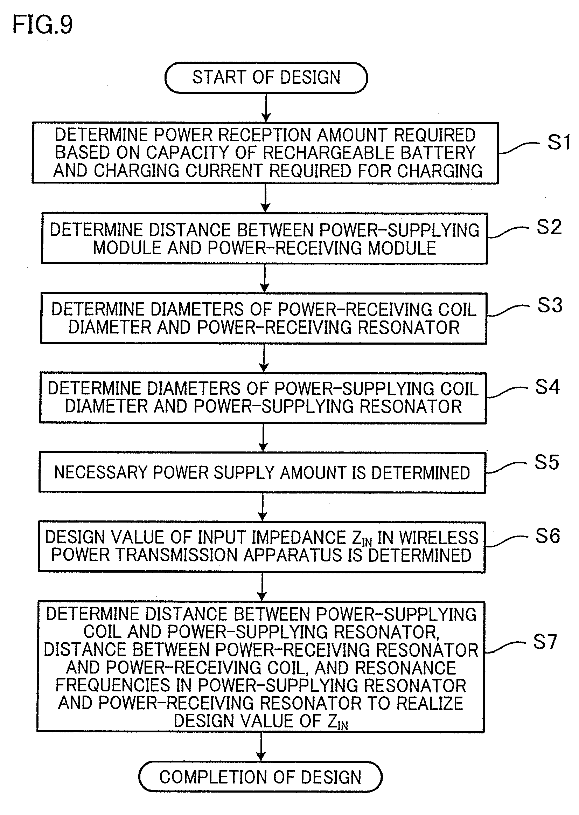

Next, the following describes with reference to FIG. 8 and FIG. 9 a design method (design process) which is a part of manufacturing process of the wireless power transmission apparatus 1. In the following description, a wireless headset 200 having an earphone speaker unit 200a, and a charger 201 are described as a portable device having the wireless power transmission apparatus 1 (see FIG. 8).

In the wireless power transmission apparatus 1 designed by the design method, the power-receiving module 3 (the power-receiving coil 31 and the power-receiving resonator 32) and the power-supplying module 2 (the power-supplying coil 21 and the power-supplying resonator 22) are mounted on the wireless headset 200 and the charger 201 shown in FIG. 8, respectively. For the sake of convenience, FIG.12 illustrates the stabilizer circuit 7, the charging circuit 8, and the rechargeable battery 9 outside the power-receiving module 3; however, these are actually disposed on the inner circumference side of the solenoid power-receiving coil 31 and the coil of the power-receiving resonator 32. That is, the wireless headset 200 includes the power-receiving module 3, the stabilizer circuit 7, the charging circuit 8, and the rechargeable battery 9, and the charger 201 has a power-supplying module 2. While in use, the power-supplying coil 21 of the power-supplying module 2 is connected to an AC power source 6.

### (Design Method)

First, as shown in FIG. 9, a power reception amount in the power-receiving module 3 is determined based on the capacity of the rechargeable battery 9, and the charging current required for charging the rechargeable battery 9 (S1).

Next, the distance between the power-supplying module 2 and the power-receiving module 3 is determined (S2). The distance is the distance d23 between the power-supplying resonator 22 and the power-receiving resonator 32, while the wireless headset 200 having therein the power-receiving module 3 is placed on the charger 201 having therein the power-supplying module 2, i.e., during the charging state. To be more specific, the distance d23 between the power-supplying resonator 22 and the power-receiving resonator 32 is determined, taking into account the shapes and the structures of the wireless headset 200 and the charger 201.

Further, based on the shape and the structure of the wireless headset 200, the coil diameters of the power-receiving coil 31 in the power-receiving module 3 and the coil of the power-receiving resonator 32 are determined (S3).

Further, based on the shape and the structure of the charger 201, the coil diameters of the power-supplying coil 21 in the power-supplying module 2 and the coil of the power-supplying resonator 22 are determined (S4).

Through the steps of S2 to S4, the coupling coefficient K₂₃ and the power transmission efficiency between the power-supplying resonator 22 (coil L₂) of the wireless power transmission apparatus 1 and the power-receiving resonator 32 (coil L₃) are determined.

Based on the power reception amount in the power-receiving module 3 determined in S1 and on the power transmission efficiency determined through S2 to S4, the minimum power supply amount required for the power-supplying module 2 is determined (S5).

Then, the design values of the input impedance Zᵢₙ in the wireless power transmission apparatus 1 is determined, taking into account the power reception amount in the power-receiving module 3, the power transmission efficiency, and the minimum power supply amount required to the power-supplying module 2 (S6).

Then, the distance d12 between the power-supplying coil 21 and the power-supplying resonator 22, the distance d34 between the power-receiving resonator 32 and the power-receiving coil 31, the resonance frequencies of the power-supplying resonator 22 and the power-receiving resonator 32, or the like are determined to achieve the design values of the input impedance Zᵢₙ determined in S6 (S7). The resonance frequencies of the power-supplying resonator 22 and the power-receiving resonator 32 are determined by the process explained in Example 1 and Example 2 and by the adjustment by the inductances and/or the capacities of the capacitors of the RLC circuits (resonance circuits) of the power-supplying resonator 22 and the power-receiving resonator 32.

According to the manufacturing method of the wireless power transmission apparatus 1 including the design method above and the wireless power transmission apparatus 1 manufactured by the design steps above, it is possible to produce a wireless power transmission apparatus 1 in which the adjustment of the supply power in the wireless power transmission by setting the input impedance Zᵢₙ of the wireless power transmission apparatus 1 is achieved without requiring an additional device. To put it differently, a wireless power transmission apparatus 1 which is able to control supply power is produced without increasing the number of components of the wireless power transmission apparatus 1 is manufactured.

### (Other Embodiments)

Although the above description of the manufacturing method deals with a wireless headset 200 as an example, the method is applicable to any devices having a rechargeable battery; e.g., tablet PCs, digital cameras, mobile phone phones, earphone-type music player, hearing aids, and sound collectors.

Although the above description deals with a wireless power transmission apparatus 1 configured to perform power transmission by means of magnetic coupling using a resonance phenomenon (magnetic field resonant state) between resonators (coils) provided to a power-supplying module 2 and a power-receiving module 3, the present invention is applicable to a wireless power transmission apparatus configured to perform power transmission by using electromagnetic induction between coils of the power-supplying device and the power-receiving device.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

The detailed description of the present invention provided hereinabove mainly focused on characteristics thereof for the purpose of easier understanding; however, the scope of the present invention shall be construed as broadly as possible, encompassing various forms of other possible embodiments, and therefore the present invention shall not be limited to the above description. Further, the terms and phraseology used in the present specification are adopted solely to provide specific illustration of the present invention, and in no case should the scope of the present invention be limited by such terms and phraseology. Further, it will be obvious to those skilled in the art that the other structures, systems, methods and the like are possible, within the spirit of the invention described in the present specification. The description of claims therefore shall encompass structures equivalent to the present invention, unless otherwise such structures are regarded as to depart from the spirit and scope of the present invention. To fully understand the object and effects of the present invention, it is strongly encouraged to sufficiently refer to disclosures of documents already made available.

### [Reference Signs List]

- 1: WIRELESS POWER TRANSMISSION APPARATUS
- 2: POWER-SUPPLYING MODULE
- 3: POWER-RECEIVING MODULE
- 6: AC POWER SOURCE
- 7: STABILIZER CIRCUIT
- 8: CHARGING CIRCUIT
- 9: RECHARGEABLE BATTERY
- 10: POWER-SUPPLIED ELECTRONIC DEVICE
- 21: POWER-SUPPLYING COIL
- 22: POWER-SUPPLYING RESONATOR
- 31: POWER-RECEIVING COIL
- 32: POWER-RECEIVING RESONATOR
- 200: WIRELESS HEADSET
- 201: CHARGER

## Claims

1. A supply power control method for a wireless power transmission apparatus which supplies power from a power-supplying module including a power-supplying resonator to a power-receiving module including a power-receiving resonator, by changing a magnetic field,
the power being controlled by setting an input impedance of the wireless power transmission apparatus by adjusting a resonance frequency of at least one of the power-supplying resonator and the power-receiving resonator.

2. The method according to claim 1, wherein,
either a transmission characteristic relative to a driving frequency of the power supplied to the power-supplying module or a coupling coefficient between the power-supplying resonator and the power-receiving resonator when the resonance frequency of the power-supplying resonator is matched with the resonance frequency of the power-receiving resonator is set as a reference value for determining the power transmission efficiency, and
the power is controlled by setting the input impedance of the wireless power transmission apparatus by adjusting the resonance frequency of at least one of the power-supplying resonator and the power-receiving resonator within a desired range including the reference value.

3. The method according to claim 1 or 2, wherein, the power is supplied from the power-supplying module including at least a power-supplying coil and the power-supplying resonator to the power-receiving module including at least the power-receiving resonator and a power-receiving coil, by a resonance phenomenon.

4. The method according to claim 3, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a lower drive frequency band than the resonance frequencies in the power-supplying module and the power-receiving module, the resonance frequency of the power-supplying resonator is adjusted based on a characteristic that, as the resonance frequency of the power-supplying resonator increases, the input impedance of the wireless power transmission apparatus decreases.

5. The method according to claim 3, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a lower drive frequency band than the resonance frequencies in the power-supplying module and the power-receiving module, the resonance frequency of the power-supplying resonator is adjusted based on a characteristic that, as the resonance frequency of the power-receiving resonator increases, the input impedance of the wireless power transmission apparatus increases.

6. The method according to claim 3, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a higher drive frequency band than the resonance frequencies in the power-supplying module and the power-receiving module, the resonance frequency of the power-supplying resonator is adjusted based on a characteristic that, as the resonance frequency of the power-supplying resonator increases, the input impedance of the wireless power transmission apparatus increases.

7. The method according to claim 3, wherein, by setting variable parameters of the power-supplying module and the power-receiving module to arrange the transmission characteristic relative to the driving frequency of the power supplied to the power-supplying module to have a double-hump characteristic peaked in a driving frequency band lower than the resonance frequencies of the power-supplying module and the power-receiving module and in a driving frequency band higher than the resonance frequencies and setting the driving frequency of the power supplied to the power-supplying module to be in a band corresponding to a peak value of a transmission characteristic occurring in a higher drive frequency band than the resonance frequencies in the power-supplying module and the power-receiving module, the resonance frequency of the power-receiving resonator is adjusted based on a characteristic that, as the resonance frequency of the power-supplying resonator increases, the input impedance of the wireless power transmission apparatus decreases.

8. The method according to any one of claims 1 to 7, wherein, each of the power-supplying resonator and the power-receiving resonator includes a capacitor, and
the resonance frequencies of the power-supplying resonator and the power-receiving resonator are adjusted by changing the capacity of the capacitor of each of the power-supplying resonator and the power-receiving resonator.

9. A wireless power transmission apparatus adjusted by the supply power control method according to any one of claims 1 to 8.

10. A manufacturing method of a wireless power transmission apparatus which supplies power from a power-supplying module including a power-supplying resonator to a power-receiving module including a power-receiving resonator, by changing a magnetic field,
either a transmission characteristic relative to a driving frequency of the power supplied to the power-supplying module or a coupling coefficient between the power-supplying resonator and the power-receiving resonator when a resonance frequency of the power-supplying resonator is matched with a resonance frequency of the power-receiving resonator being set as a reference value for determining the power transmission efficiency, and
the power being controlled by setting the input impedance of the wireless power transmission apparatus by adjusting the resonance frequency of at least one of the power-supplying resonator and the power-receiving resonator within a desired range including the reference value.
